(19) **Europäisches Patentamt / European Patent Office / Office européen des brevets**

(11) **EP 1 845 525 A1**

(12) **EUROPEAN PATENT APPLICATION**

(43) Date of publication:
**17.10.2007 Bulletin 2007/42**

(51) Int Cl.:
***G11B 7/24*** *(2006.01)*

(21) Application number: **07104661.9**

(22) Date of filing: **22.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **12.04.2006 JP 2006109943**

(71) Applicant: **Kabushiki Kaisha Toshiba Tokyo 105-8001 (JP)**

(72) Inventors:
• **Ootera, Yasuaki**
  **Toshiba Corporation**
  **Tokyo 105-8001 (JP)**

• **Yoshida, Nobuhisa**
  **Toshiba Corporation**
  **Tokyo 105-8001 (JP)**
• **Nakamura, Naomasa**
  **Toshiba Corporation**
  **Tokyo 105-8001 (JP)**

(74) Representative: **Henkel, Feiler & Hänzel Patentanwälte**
**Maximiliansplatz 21**
**80333 München (DE)**

(54) **Optical disk, optical disk apparatus, and optical disk reproducing method**

(57)    According to one embodiment, a multilayer optical disk includes three or more recording layers (L0, L1, L2), and one of conditions:

$$(1) \quad R_n / ((R_{n-1} + R_{n-2}) / 2) > 0.6;$$

and

$$(2) \quad R_n \times (100 - R_{n-1})^2 / (R_{n-2} \times R_{n-1} \times R_{n-1}) > 30$$

is satisfied, where $R_n(\%)$ is a reflectivity of an nth layer (n > 2) when seen from a surface (IS) on which a reproducing light is incident.

**EP 1 845 525 A1**

F I G. 3

**Description**

One embodiment of the invention relates to a multilayer optical disk which can record information, such as a CD, a DVD, a BD (Blu-ray disk), an HD DVD, etc. Additionally, another embodiment of the invention relates to an optical disk apparatus which reproduces the multilayer optical disk. Further, still another embodiment of the invention relates to an optical disk reproducing method.

Currently, optical disks such as CDs and DVDs are generally used as media for storing digitized information. Among these optical disks, a DVD (or an HD DVD whose standardization is in progress as the next-generation optical disk) includes a disk structure where two plastic substrates are attached to each other. Hence, it is relatively easy to increase the storage capacity of the DVD by using two information recording layers. However, in order to meet the needs for a higher capacity, a multilayer optical disk including three or more layers has also been developed. A multilayer optical disk with an increased storage capacity is relatively compatible with a current recording/reproducing system.

In a multilayer optical disk, when the number of layers is increased, the more distant a recording layer is from an incident surface, the number of times a reproducing light passes through the other layers to reach the recording layer is increased. Hence, the amount of the reproducing light is decreased. Thus, an optical disk is proposed in which the reflectivity of each layer is set so as to prevent a decrease in the amount of the reproducing light (for example, refer to Japanese Patent Application KOKAI Publication No. 11-016208 (hereinafter referred to as "the Publication No. 11-016208")).

In multilayer optical disks, a reproduction signal is degraded by crosstalk between layers. In the case where a multilayer optical disk includes three or more layers, at the time of reproduction of an nth layer (n > 2), the factor for degradation of the reproduction signal is a leakage component (interlayer crosstalk component) of a signal which returns to a detection system after multiple reflection in the order of (n-1th layer) → (n-2th layer) → (n-1th layer).

In order to reduce the interlayer crosstalk component, a method has been considered which differentiates, for example, an interlayer distance between the nth layer and the n-1th layer from an interlayer distance between the n-1th layer and the n-2th layer. With this method, a light path difference is generated between a reproduction signal component and the leakage component. Accordingly, it is possible to reduce the interlayer crosstalk component.

However, in this method, if the number of layers is increased, the number of interlayer distances between adjacent intermediate layers is also increased so that highly accurate distance control is required. This results in a pressure on a manufacturing margin of a multilayer optical disk. Hence, the Publication No. 11-016208 provides a multilayer optical disk which allows reproduction of a good signal by sequentially increasing the reflectivity of a lower layer than that of an upper layer, and preventing degradation of a signal in lower layers which is detected by setting the reflectivity to a value associated with a specific relationship.

An object of the invention is to reduce an interlayer crosstalk component by defining the relationship among reflectivities of an nth layer, a n-1th layer, and a n-2th layer.

According to an embodiment of the invention, there is provided a multilayer optical disk including three or more recording layers, wherein one of conditions:

(1) $R_n / ((R_{n-1} + R_{n-2}) / 2) > 0.6$; and
(2) $R_n \times (100 - R_{n-1})^2 / (R_{n-2} \times R_{n-1} \times R_{n-1}) > 30$ is satisfied, where $R_n$(%) is a reflectivity of an nth layer (n > 2) when seen from a surface on which a reproducing light is incident.

According to another embodiment of the invention, there is provided an optical disk apparatus including: a light emitting unit which emits a laser light onto a multilayer optical disk including three or more recording layers and satisfying one of conditions:

(1) $R_n / ((R_{n-1} + R_{n-2}) / 2) > 0.6$; and
(2) $R_n \times (100 - R_{n-1})^2 / (R_{n-2} \times R_{n-1} \times R_{n-1}) > 30$,

where $R_n$(%) is a reflectivity of an nth layer (n > 2) when seen from a surface on which a reproducing light is incident; a photodetector configured to receive a reflected light of the laser light emitted by the light emitting unit and reflected by the multilayer optical disk; and a reproducing unit which reproduces the multilayer optical disk based on the reflected light received by the photodetector.

According to still another embodiment of the invention, there is provided an optical disk reproducing method including: emitting a laser light onto a multilayer optical disk including three or more recording layers and satisfying one of conditions: (1) $R_n / ((R_{n-1} + R_{n-2}) / 2) > 0.6$; and (2) $R_n \times (100 - R_{n-1})^2 / (R_{n-2} \times R_{n-1} \times R_{n-1}) > 30$, where $R_n$(%) is a reflectivity of an nth layer (n > 2) when seen from a surface on which a reproducing light is incident; receiving the light reflected by the multilayer optical disk; and reproducing the multilayer optical disk based on the reflected light.

According to an embodiment of the invention, it is possible to secure the quality of the reproduction signal of the nth layer by suppressing a leakage component which causes multiple reflection in layers closer to a light incident surface than the nth layer, by controlling the reflectivity of the nth layer not to be excessively small with respect to the reflectivities of the layers closer to the light incident surface.

The invention can be more fully understood from the following detailed description when taken in conjunction with the accompanying drawings, in which:

FIG. 1 is an exemplary diagram showing an exemplary structure of a multilayer optical disk (single-sided, triple-layer optical disk) according to an embodiment of the invention;

FIG. 2 is an exemplary diagram showing an exemplary flow of a manufacturing method of the single-sided, triple-layer optical disk;

FIG. 3 is an exemplary diagram showing an interlayer crosstalk component due to multiple reflection;

FIG. 4 is an exemplary graph showing an exemplary relationship between an error rate (SbER) and a ratio of a signal component ($R_3$) to a noise component ($R_2$);

FIG. 5 is an exemplary table showing an exemplary relationship between reflectivities and an error rate (SbER) in a third layer in the single-sided, triple-layer optical disk;

FIG. 6 is an exemplary graph showing an exemplary relationship between the reflectivities and a signal quality (an error rate (SbER) in a third layer in the single-sided, triple-layer optical disk);

FIG. 7 is an exemplary graph showing an exemplary relationship between the reflectivities and the signal quality (an error rate (SbER) in a third layer in the single-sided, triple-layer optical disk;

FIG. 8 is an exemplary diagram showing an interlayer crosstalk component due to multiple reflection in a multilayer optical disk including four or more layers; and

FIG. 9 is an exemplary block diagram showing an exemplary schematic structure of an optical disk apparatus according to an embodiment of the invention which reproduces the multilayer optical disk.

Various embodiments according to the invention will be described hereinafter with reference to the accompanying drawings. In general, according to one embodiment of the invention, a multilayer optical disk includes three or more recording layers, wherein one of conditions: (1) $R_n / ((R_{n-1} + R_{n-2}) / 2) > 0.6$; and (2) $R_n \times (100 - R_{n-1})^2 / (R_{n-2} \times R_{n-1} \times R_{n-1}) > 30$ is satisfied, where $R_n(\%)$ is a reflectivity of an nth layer (n > 2) when seen from a surface on which a reproducing light is incident.

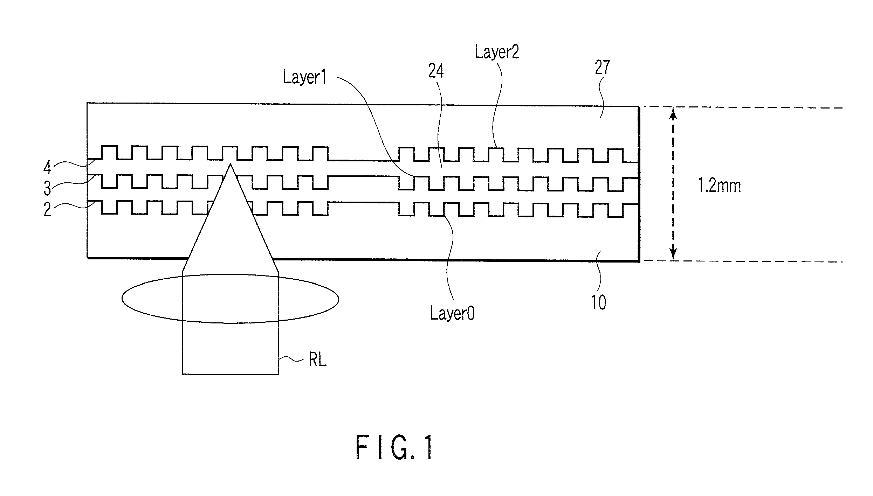

FIG. 1 is an exemplary cross-sectional view showing an exemplary structure of a multilayer optical disk (single-sided, triple-layer optical disk) according to an embodiment of the invention. The multilayer optical disk shown in FIG. 1 is, for example, a single-sided, triple-layer HD DVD ROM disk. In the multilayer optical disk shown in FIG. 1, a signal recording pattern 2 is formed on a Layer 0 (L0) molded board 10, a signal recording pattern 4 is formed on a Layer 2 (L2) molded board 27, and a signal recording pattern 3 for Layer 1 (L1) is formed on a photopolymer layer 24. Information is recorded in the signal recording patterns 2, 3 and 4. A reproducing light RL, having a wavelength of 405 nm, is emitted from the bottom side of FIG. 1 by using an optical system having a numerical aperture (N/A) of 0.65.

Pits are formed in a spiral shape on each information recording layer. The length of a shortest pit is 0.204 μm, and a track pitch is 0.40 μm. As for the size of the multilayer optical disk, the outer diameter is 120 mm, the internal diameter is 15 mm, and the total thickness is 1.2 mm ±0.03 mm, which are the same as those of a CD or a DVD (or an HD DVD or a BD).

However, the form of the multilayer optical disk is not limited to the above-mentioned form. The multilayer optical disk may include four or more information recording layers, or may be a double-sided multilayer optical disk including three or more information recording layers in total. Additionally, the multilayer optical disk may include two or less layers as long as a layer made of a photopolymer is included. The multilayer optical disk may be a write-once optical disk or a read-only optical disk, and may use an optical system for a DVD or a BD. Further, the multilayer optical disk may include a higher-density pattern or may include a layer having a low-density pattern. The multilayer optical disk may be a reduced-diameter disk having an outer diameter of 80 mm. However, it is assumed that, in a multilayer optical disk according to an embodiment of the invention, information is recorded in a recording pattern formed by pits.

Typically, silver, aluminum, silver alloy or aluminum alloy is used for a reflecting film of a triple-layer optical disk. In this case, the reflectivity of each layer is generally within a range of 2% to 20% (preferably, 4% to 17%). It should be noted that "the reflectivity" described herein is, for example, the reflectivity conforming to the DVD specification or the HD DVD specification, and is "High Level" of a reproduction signal waveform of a long pit.

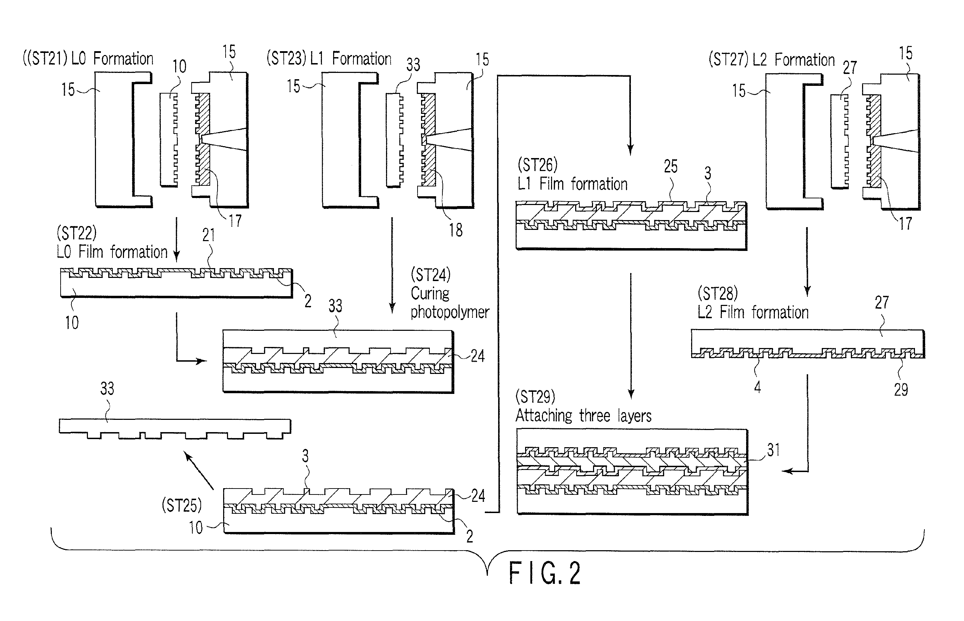

FIG. 2 is an exemplary diagram showing an exemplary flow of a manufacturing method of the single-sided, triple-layer optical disk according to the embodiment of the invention.

Referring to FIG. 2, a description is given below of the manufacturing method of the single-sided, triple-layer optical disk according to the embodiment of the invention. In FIG. 2, those parts which are the same as those corresponding parts in FIG. 1 are designated by the same reference numerals.

As shown in FIG. 2, first, the L0 molded board 10 on which L0 (the recording pattern 2) is transferred is manufactured by injection molding (ST21). This process is the same as that of a normal single-sided or double-sided DVD or HD DVD. Generally, polycarbonate is used as a molding material, and a Ni stamper 17, serving as a mold, is manufactured by plating a master which is manufactured by lithography. Then, a semi-transparent reflecting film 21 is formed on the recording pattern 2 of the L0 molded board 10, which is manufactured in ST21 (ST22). In parallel with the L0 molded board 10, similarly, a plastic stamper 33 for L1 is manufactured by injection molding (ST23).

Generally, a cycloolefin polymer is used as a material of the plastic stamper 33. However, instead of the cycloolefin polymer, PMMA (polymethylmetacrylat) or polycarbonate may be used. A Ni stamper 18 is used for injection molding, and basically, equipment such as a molding machine and a metal mold 15 for a normal DVD is used. The L0 molded board 10 and the plastic stamper 33, which are prepared as mentioned above, are attached to each other by interposing the photopolymer layer 24 therebetween, and the photopolymer layer 24 is cured by ultraviolet light (ST24).

The photopolymer layer 24 is generally formed (applied) by spin coating. The photopolymer layer 24 serves as both a transfer layer of the recording pattern 3 of L1 and an intermediate layer which separates L0 from L1. After curing the photopolymer layer 24, the plastic stamper 33 is removed from the photopolymer layer 24 (ST25). The recording pattern 3 (of L1) is formed by the thus exposed photopolymer layer 24, and semi-transparent reflecting film 25 is formed on the recording pattern 3 (ST26).

In parallel with the L0 molded board 10 and the plastic stamper 33, an L2 molded board 27 on which L2 (the recording pattern 4) is transferred is manufactured by injection molding (ST27). This process is the same as that for a normal dual-layer DVD or HD DVD. Generally, the L2 molded board 27 is molded by using polycarbonate and the Ni stamper 17. A reflecting film 29 is formed on the recording pattern 4 of the L2 molded board 27 (ST28). Thus prepared L2 molded board 27 is attached to the semi-transparent reflecting film 25 on the recording pattern 3 of L1 by using an ultraviolet-curing resin 31 (ST29). This process is the same as that for a normal dual-layer DVD or HD DVD, and an adhesive layer formed by the ultraviolet-curing resin 31 serves as an intermediate layer which separates L1 from L2. In this manner, the single-sided, triple-layer optical disk is completed.

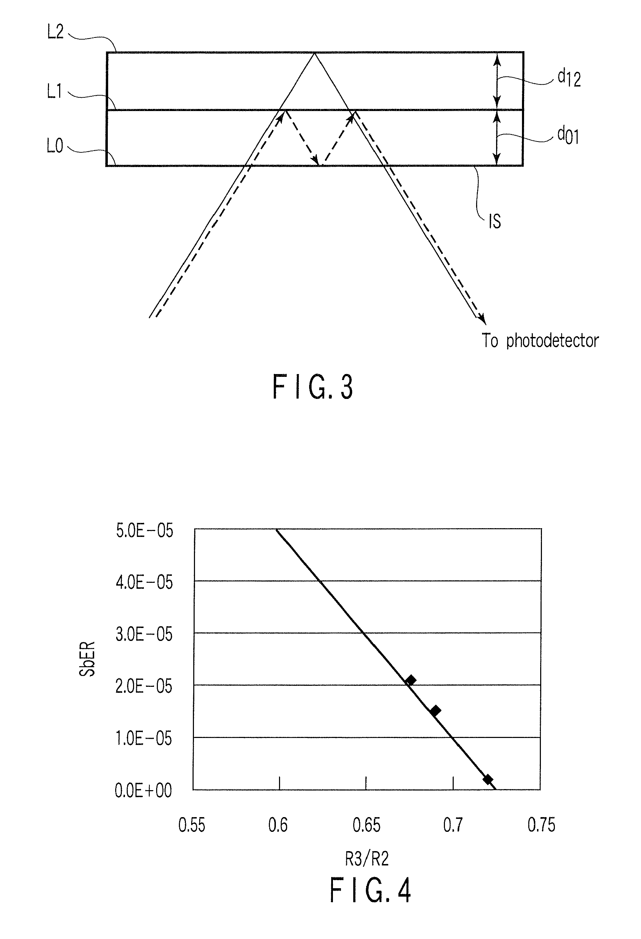

FIG. 3 is an exemplary diagram showing an interlayer crosstalk component due to multiple reflection in the triple-layer optical disk at the time of reproduction of a third layer (L2) when seen from a surface (incident surface) IS on which a reproduction light is incident. Referring to FIG. 3, in the case where an interlayer distance $d_{01}$ (distance between L0 and L1) is equal to an interlayer distance $d_{12}$ (distance between L1 and L2), the light path length of a reproduction light component (indicated by continuous lines) which is reflected by L2 and incident on a photodetector (not shown) is equal to the light path length of a leakage component (interlayer crosstalk component) which is reflected by L1 → L0 → L1 in this order and incident on the photodetector (indicated by dotted lines). In this case, the interlayer crosstalk component is increased, which results in significant degradation of the quality of a reproduction signal from L2.

As for methods for preventing such degradation, there is a method which sets $d_{01} \neq d_{12}$. With this method, the light path length of the reproduction signal component becomes different from the light path length of the interlayer crosstalk component, and it is possible to reduce degradation of the quality of the reproduction signal. However, according to this method, if the number of the layers is increased, the number of the interlayer distances between adjacent intermediate layers is also increased so that many interlayer distances must be controlled with a high accuracy. As described with reference to FIG. 2, an intermediate layer is generally formed by spin coating an ultra-violet curing resin (photopolymer). For example, in an optical system for an HD DVD, the thickness between layers is about 15 to 30 $\mu$m. Hence, the uniformity in an entire optical disk is generally, for example, about 4 $\mu$m in peak-to-peak. In addition to such control limits, if a condition is set to vary the thickness between adjacent intermediate layers, it is extremely difficult to manufacture an optical disk. As a result, the manufacturing margin and yield of an optical disk are considerably pressed.

Therefore, in an embodiment of the invention, the above-mentioned problem is avoided by defining a reflectivity $R_3$ of the third layer (L2) not to be excessively small with respect to a reflectivity $R_2$ of a second layer (L1) and a reflectivity $R_1$ of a first layer (L0).

First, the relationship among the reflectivity $R_3$ of L2, which is a L2 reproduction signal, the reflectivity $R_2$ of L1, which is a noise component, and an error rate (SbER: Simulated Bit Error Rate) of the L2 reproduction signal is considered as a most simple system. FIG. 4 is an exemplary graph showing an experimental result. The SbER is an indicator indicating the signal quality of an HD DVD. From a practical perspective, the SbER should be $5.0 \times 10^{-5}$ or less. Referring to the graph shown in FIG. 4, in order to achieve SbER < $5.0 \times 10^{-5}$, it is found that the signal component ($R_3$) should be equal to or more than 0.6 times as large as the noise component ($R_2$), that is, $R_3 > 0.6 \times R_2$. The same applies to the case where the noise component is the reflectivity $R_1$ from L0 ($R_3 > 0.6 \times R_1$).

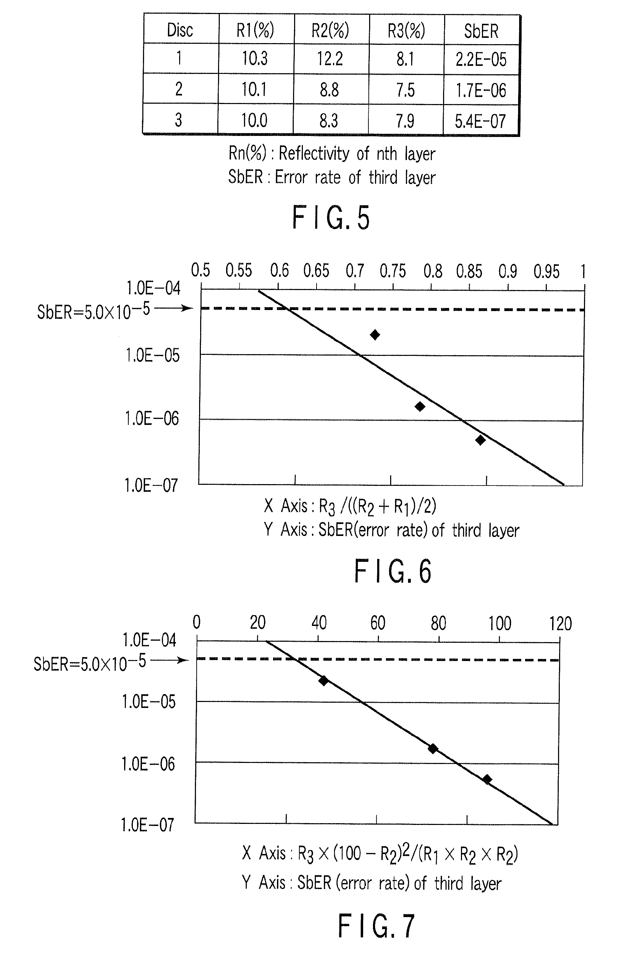

Further, an experiment was conducted in consideration of light paths of multiple reflection (FIG. 3) which is specific to multilayer optical disks. FIG. 5 is an exemplary graph showing an experimental result. The respective reflectivities of the triple-layers and the error rate (SbER) of the reproduction signal of the third layer were measured. The SbER is the indicator indicating the signal quality of an HD DVD. From a practical perspective, the SbER should be $5.0 \times 10^{-5}$ or less. FIGS. 6 and 7 are exemplary graphs showing experimental results.

In FIG. 6, an X-axis represents the value obtained by dividing $R_3$ by the average value of $R_1$ and $R_2$ ($R_3$ / ($R_2$ + $R_1$) / 2) (Expression 1). The numerator, $R_3$, is proportional to the strength of the reproduction signal, and the denominator, the average value of $R_1$ and $R_2$, is proportional to the strength of a crosstalk signal. Hence, the smaller the value of Expression 1 becomes, the larger the interlayer crosstalk component (light path of L1 → L0 → L1 → photodetector) with respect to the reproduction signal becomes. Thus, the error rate is increased. On this occasion, in terms of the signal quality of the third layer, it may be desirable that the reproduction signal component is larger than the average value of $R_1$ and $R_2$, in other words, $R_3 / ((R_2 + R_1) / 2) > 1$. However, referring to the graph shown in FIG. 6, it is found that a permissible range (SbER < $5.0 \times 10^{-5}$) is $R_3 / ((R_2 + R_1) / 2) > 0.6$.

In FIG. 7, an X-axis represents the value obtained by dividing the signal strength of the reproduction signal from the third layer by crosstalk strength

$$(R_3 \times (100 - R_2)^2 / (R_1 \times R_2 \times R_2)) \quad (\text{Expression 2})$$

(for simplicity, absorption by the reflecting film and those components other than the components of the most influential light path are ignored). In Expression 2, the numerator is the reproduction signal, and the denominator is the leakage signal. Hence, the smaller the value of the Expression 2 becomes, the larger the interlayer crosstalk component (the light path of L1 → L0 → L1 → photodetector) with respect to the reproduction signal becomes, and naturally, the error rate is increased. Referring to FIG. 7, it is found that a permissible range (SbER < $5.0 \times 10^{-5}$) is $R_3 \times (100 - R_2)^2 / (R_1 \times R_2 \times R_2) > 30$.

That is, in order to secure the quality of the reproduction signal in the triple-layer optical disk by suppressing the interlayer crosstalk component, the reflectivity of each layer is selected to satisfy the following conditions (1) or (2).

    (1) $R_3 / ((R_2 + R_1) / 2) > 0.6$
    (desirably, $R_3 / ((R_2 + R_1) / 2) > 1$)
    (2) $R_3 \times (100 - R_2)^2 / (R_1 \times R_2 \times R_2) > 30$

As mentioned above, it is possible to secure the quality of the reproduction signal of the third layer by suppressing the leakage component due to multiple reflection in the layers closer to the incident surface than the third layer, by defining the reflectivity of the third layer not to be excessively small with respect to the reflectivities of the layers closer to the incident surface.

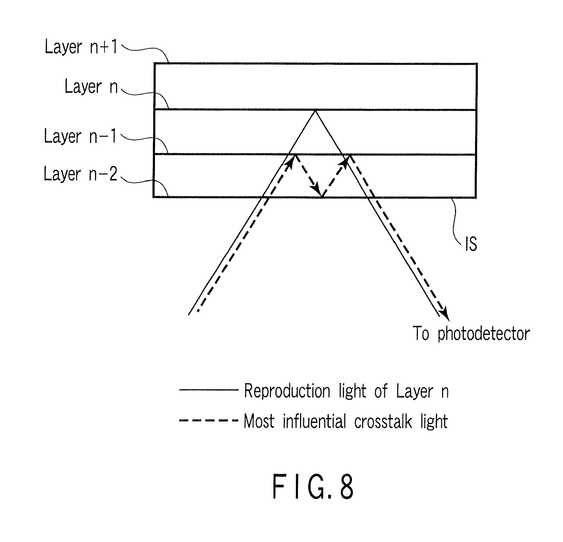

FIG. 8 shows an interlayer crosstalk component due to multiple reflection at the time of reproduction of an nth layer (Layer n) when seen from a surface (incident surface) IS on which a reproduction light is incident.

As shown in FIG. 8, it is found that the light path length of a reproduction light component (indicated by continuous lines) which is reflected by Layer n and is incident on a photodetector is equal to the light path length of a leakage component (interlayer crosstalk component) (indicated by dotted lines) which is reflected in the order of Layer n-1 → Layer n-2 → Layer n-1 and is incident on the photodetector (multiple reflection). In this case, the interlayer crosstalk component is increased, and the quality of the reproduction light reflected by Layer n is significantly degraded.

It can be said that, in the multilayer optical disk including three or more layer (FIG. 8), a condition for securing the quality of the reproduction signal of the nth layer is to satisfy the following conditions (3) or (4), where $R_n$(%) is the reflectivity of the nth layer (n > 2) when seen from the incident surface IS.

    (3) $R_n / ((R_{n-1} + R_{n-2}) / 2) > 0.6$
    (desirably, $R_n / ((R_{n-1} + R_{n-2}) / 2) > 1$)
    (4) $R_n \times (100 - R_{n-1})^2 / (R_{n-2} \times R_{n-1} \times R_{n-1}) > 30$

As mentioned above, it is possible to secure the quality of the reproduction signal of the nth layer by suppressing the leakage component due to multiple reflection in the layers closer to the incident surface IS than the nth layer, by defining the reflectivity of the nth layer not to be excessively small with respect to the reflectivities of the layers closer to the incident surface IS.

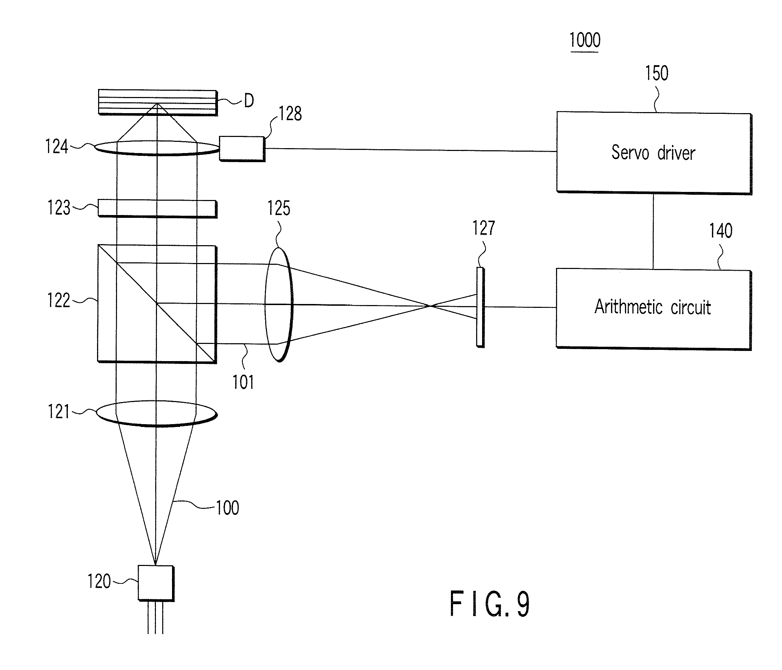

Next, a description is given of an optical disk apparatus 1000 according to an embodiment of the invention which reproduces information recorded on the above-mentioned multilayer optical disk (indicated by "D" in FIG. 9). FIG. 9 is an exemplary block diagram showing an exemplary schematic structure of the optical disk apparatus 1000 which reproduces the multilayer optical disk D (hereinafter referred to as "the optical disk D"). As shown in FIG. 9, the optical disk D is, for example, the single-sided, triple-layer optical disk as shown in FIG. 1. A semiconductor laser light source 120 having a short wavelength is used as a light source. The wavelength of light 100 emitted from the semiconductor laser light source 120 is, for example, in a range of 400 nm to 410 nm, i.e., a purple wavelength range. The light 100 emitted from the semiconductor laser light source 120 enters a collimating lens 121 and exits as parallel light. The parallel light passes through a polarizing beam splitter 122 and a λ/4 board 123, and enters an objective lens 124. Then, the light passes through a substrate of the optical disk D, and is focused on each information recording layer of the optical disk D. Reflected light 101 reflected by an information recording layer of the optical disk D passes through the substrate of the optical disk D again, passes through the objective lens 124 and the λ/4 board 123, and is reflected by the polarizing beam splitter 122. Then, the reflected light 101 passes through a condenser lens 125, and is incident on a photodetector 127.

A photoreceiving unit of the photodetector 127 is generally divided into a plurality of portions, and each of the portions outputs a current corresponding to light intensity. The output current is converted into a voltage signal by an I/V amplifier (current-to-voltage conversion) (not shown), and is input to an arithmetic circuit 140. The input voltage signal is subjected to arithmetic processing by the arithmetic circuit 140, and a tilt error signal, a HF signal, a focus error signal, a tracking error signal, etc. are generated. The tilt error signal is used for tilt control. The HF signal is for reproducing the information recorded on the optical disk D. The focus error signal is used for focus control. The tracking error signal is used for tracking control.

The objective lens 124 can be driven up and down, in a disk radial direction, and in a tilt direction (radial direction and/or tangential direction) by a lens actuator 128. The objective lens 124 is controlled by a servo driver 150 to follow information tracks on the optical disk D. It should be noted that there are two kinds of tilt directions: a "radial tilt" caused by a tilt of a disk surface toward the center of the optical disk D; and a "tangential tilt" caused in a tangential direction of an information track. Among these kinds of tilts, the radial tilt is generally caused. In addition to a tilt caused at the time of manufacturing of the optical disk D, a tilt due to aging or a sudden change in a use environment should be considered.

By using the optical disk apparatus 1000 as mentioned above, it is possible to reproduce the multilayer optical disk according to the embodiment of the invention.

## Claims

1. A multilayer optical disk including three or more recording layers,
**characterized in that** one of conditions:

> (1) $R_n / ((R_{n-1} + R_{n-2}) / 2) > 0.6$; and
> (2) $R_n \times (100 - R_{n-1})^2 / (R_{n-2} \times R_{n-1} \times R_{n-1}) > 30$ is satisfied, where $R_n$(%) is a reflectivity of an nth layer (n > 2) when seen from a surface on which a reproducing light is incident.

2. The multilayer optical disk according to claim 1, **characterized in that** the layers comprise:

> a first layer including a first recording pattern with a first density; and
> a second layer including a second recording pattern whose density is higher than the first density.

3. The multilayer optical disk according to claim 1, **characterized in that** the layers comprise a recordable layer on which information can be recorded.

4. The multilayer optical disk according to claim 1, **characterized in that** the layers comprise a layer on which information is recorded in advance.

5. The multilayer optical disk according to claim 1, **characterized in that** the reflectivity of the nth layer is equal to or more than 0.6 times as large as a reflectivity of a n-1th layer.

6. The multilayer optical disk according to claim 5, **characterized in that** the layers comprise:

> a first layer including a first recording pattern with a first density; and
> a second layer including a second recording pattern whose density is higher than the first density.

7. The multilayer optical disk according to claim 5, **characterized in that** the layers comprise a recordable layer on which information can be recorded.

8. The multilayer optical disk according to claim 5, **characterized in that** the layers comprise a layer on which information is recorded in advance.

9. The multilayer optical disk according to claim 1, **characterized in that** the reflectivity of the nth layer is equal to or more than 0.6 times as large as a reflectivity of a n-2th layer.

**10.** The multilayer optical disk according to claim 9, **characterized in that** the layers comprise:

a first layer including a first recording pattern with a first density; and
a second layer including a second recording pattern whose density is higher than the first density.

**11.** The multilayer optical disk according to claim 9, **characterized in that** the layers comprise a recordable layer on which information can be recorded.

**12.** The multilayer optical disk according to claim 9, **characterized in that** the layers comprise a layer on which information is recorded in advance.

**13.** An optical disk apparatus, **characterized by** comprising:

a light emitting unit which emits a laser light onto a multilayer optical disk including three or more recording layers and satisfying one of conditions:

(1) $R_n / ((R_{n-1} + R_{n-2}) / 2) > 0.6$; and
(2) $R_n \times (100 - R_{n-1})^2 / (R_{n-2} \times R_{n-1} \times R_{n-1}) > 30$, where $R_n(\%)$ is a reflectivity of an nth layer (n > 2) when seen from a surface on which a reproducing light is incident;

a photodetector configured to receive a reflected light of the laser light emitted by the light emitting unit and reflected by the multilayer optical disk; and
a reproducing unit which reproduces the multilayer optical disk based on the reflected light received by the photodetector.

**14.** The optical disk apparatus according to claim 13, **characterized in that** the reflectivity of the nth layer is equal to or more than 0.6 times as large as a reflectivity of a n-1th layer.

**15.** The optical disk apparatus according to claim 13, **characterized in that** the reflectivity of the nth layer is equal to or more than 0.6 times as large as a reflectivity of a n-2th layer.

**16.** An optical disk reproducing method,
**characterized by** comprising:

emitting a laser light onto a multilayer optical disk including three or more recording layers and satisfying one of conditions:

(1) $R_n / ((R_{n-1} + R_{n-2}) / 2) > 0.6$; and
(2) $R_n \times (100 - R_{n-1})^2 / (R_{n-2} \times R_{n-1} \times R_{n-1}) > 30$, where $R_n(\%)$ is a reflectivity of an nth layer (n > 2) when seen from a surface on which a reproducing light is incident;

receiving the light reflected by the multilayer optical disk; and
reproducing the multilayer optical disk based on the reflected light.

EP 1 845 525 A1

FIG. 1

FIG. 2

(ST21) L0 Formation

(ST22)
L0 Film formation

(ST23) L1 Formation

(ST24)
Curing
photopolymer

(ST25)

(ST26)
L1 Film formation

(ST27) L2 Formation

(ST28)
L2 Film formation

(ST29)
Attaching three layers

EP 1 845 525 A1

FIG.3

R3/R2

FIG.4

| Disc | R1(%) | R2(%) | R3(%) | SbER |
|------|-------|-------|-------|---------|
| 1 | 10.3 | 12.2 | 8.1 | 2.2E-05 |
| 2 | 10.1 | 8.8 | 7.5 | 1.7E-06 |
| 3 | 10.0 | 8.3 | 7.9 | 5.4E-07 |

Rn(%) : Reflectivity of nth layer
SbER : Error rate of third layer

# F I G. 5

X Axis : $R_3 / ((R_2 + R_1)/2)$
Y Axis : SbER(error rate) of third layer

# F I G. 6

X Axis : $R_3 \times (100 - R_2)^2 / (R_1 \times R_2 \times R_2)$
Y Axis : SbER (error rate) of third layer

# F I G. 7

FIG. 8

FIG.9

EP 1 845 525 A1

**European Patent Office**

# EUROPEAN SEARCH REPORT

Application Number

EP 07 10 4661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 434 107 B1 (ARTIGALAS MAX [FR] ET AL) 13 August 2002 (2002-08-13)<br><br>* column 3, line 23 - column 6, line 33; claims 1-8; figures 2,5,6 *<br>----- | 1,2,4-6, 8-10, 12-16 | INV. G11B7/24 |
| X | EP 1 178 472 A (TDK CORP [JP]) 6 February 2002 (2002-02-06)<br><br>* paragraphs [0009] - [0040], [0121] - [0131]; figures 3,5 *<br>----- | 1,3-5, 7-9, 11-16 | |
| X | US 6 160 787 A (MARQUARDT JR RICHARD [US] ET AL) 12 December 2000 (2000-12-12)<br><br>* column 2, line 49 - column 5, line 39; figures 2,5 *<br>----- | 1,2,4-6, 8-10, 12-16 | |
| X | EP 0 658 887 A1 (IBM [US]) 21 June 1995 (1995-06-21)<br>* page 3, line 54 - page 10, line 43; figures 1-6; table VIII *<br>----- | 1,4,5,9, 13-16 | TECHNICAL FIELDS SEARCHED (IPC)<br><br>G11B |
| X | US 2003/138591 A1 (NEE HAN H [US]) 24 July 2003 (2003-07-24)<br>* paragraph [0089]; figure 4 *<br>----- | 1,4,5,9, 13-16 | |
| X | US 4 450 553 A (HOLSTER PETER L [NL] ET AL) 22 May 1984 (1984-05-22)<br>* column 11, lines 15-51; figure 5 *<br>----- | 1,4,5,9, 13-16 | |

The present search report has been drawn up for all claims

| Place of search | Date of completion of the search | Examiner |
|---|---|---|
| Munich | 18 July 2007 | Baur, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 845 525 A1

# ANNEX TO THE EUROPEAN SEARCH REPORT
## ON EUROPEAN PATENT APPLICATION NO.

EP 07 10 4661

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2007

| Patent document cited in search report | | Publication date | Patent family member(s) | | Publication date |
|---|---|---|---|---|---|
| US 6434107 | B1 | 13-08-2002 | AT | 255266 T | 15-12-2003 |
| | | | BR | 9706549 A | 20-07-1999 |
| | | | CN | 1196817 A | 21-10-1998 |
| | | | CN | 1558412 A | 29-12-2004 |
| | | | CN | 1909090 A | 07-02-2007 |
| | | | DE | 69726387 D1 | 08-01-2004 |
| | | | DE | 69726387 T2 | 16-09-2004 |
| | | | EP | 0847580 A1 | 17-06-1998 |
| | | | ES | 2212111 T3 | 16-07-2004 |
| | | | FR | 2750528 A1 | 02-01-1998 |
| | | | WO | 9800842 A1 | 08-01-1998 |
| | | | HK | 1015514 A1 | 25-02-2005 |
| | | | ID | 17785 A | 29-01-1998 |
| | | | JP | 11511889 T | 12-10-1999 |
| EP 1178472 | A | 06-02-2002 | JP | 2002050053 A | 15-02-2002 |
| | | | US | 2002021656 A1 | 21-02-2002 |
| US 6160787 | A | 12-12-2000 | NONE | | |
| EP 0658887 | A1 | 21-06-1995 | CA | 2134140 A1 | 16-06-1995 |
| | | | CN | 1112272 A | 22-11-1995 |
| | | | DE | 69423080 D1 | 30-03-2000 |
| | | | DE | 69423080 T2 | 14-09-2000 |
| | | | JP | 7201077 A | 04-08-1995 |
| | | | SG | 43793 A1 | 14-11-1997 |
| US 2003138591 | A1 | 24-07-2003 | NONE | | |
| US 4450553 | A | 22-05-1984 | AT | 363701 B | 25-08-1981 |
| | | | AT | 215579 A | 15-01-1981 |
| | | | AU | 525972 B2 | 09-12-1982 |
| | | | AU | 4534779 A | 27-09-1979 |
| | | | CA | 1149060 A1 | 28-06-1983 |
| | | | CH | 643387 A5 | 30-05-1984 |
| | | | DE | 2910390 A1 | 04-10-1979 |
| | | | ES | 478768 A1 | 01-07-1979 |
| | | | FR | 2420811 A1 | 19-10-1979 |
| | | | GB | 2017379 A | 03-10-1979 |
| | | | JP | 1363333 C | 09-02-1987 |
| | | | JP | 54130902 A | 11-10-1979 |
| | | | JP | 61027815 B | 27-06-1986 |
| | | | NL | 7803069 A | 25-09-1979 |
| | | | SE | 7902406 A | 23-09-1979 |

EPO FORM P0459

For more details about this annex : see Official Journal of the European Patent Office, No. 12/82

**EP 1 845 525 A1**

**REFERENCES CITED IN THE DESCRIPTION**

**Patent documents cited in the description**

- JP 11016208 A
- WO 11016208 A